# EUROPÄISCHE PATENTSCHRIFT

(11) **EP 2 519 390 B1**
(45) Veröffentlichungstag und Bekanntmachung des Hinweises auf die Patenterteilung: **23.12.2015**
(21) Anmeldenummer: 10803579.1
(22) Anmeldetag: 30.12.2010
(51) Int. Cl.: B29C 41/08, B29C 41/18, B29C 41/22, B29C 37/00

(54) **FORMHAUT UND VERFAHREN ZUR HERSTELLUNG EINER FORMHAUT**
MOULDED SKIN AND METHOD OF MANUFACTURING THE SKIN
PEAU DE MOULAGE ET PROCÉDÉ DESTINÉ À SA FABRICATION

(30) Priorität: 30.12.2009 DE 102009060943
(43) Veröffentlichungstag der Anmeldung: 07.11.2012
(73) Patentinhaber: Faurecia Innenraum Systeme GmbH, 76767 Hagenbach (DE)
(72) Erfinder: PERINET, Denis, Shangai 200120 (CN)
(74) Vertreter: Pfenning, Meinig & Partner GbR
(86) Internationale Anmeldenummer: PCT/EP2010/008004
(87) Internationale Veröffentlichungsnummer: WO 2011/079961

(56) Entgegenhaltungen:
- EP-A1- 1 240 990
- DE-A1- 3 517 251
- DE-A1- 19 539 261
- JP-A- 2 141 212
- JP-A- 2 178 009
- JP-A- 63 188 009

## Beschreibung

Die Erfindung betrifft eine Formhaut mit einer ersten Plastisolschicht aufweisend eine erste Färbung, sowie ein Verfahren zum Herstellen einer Formhaut. Gattungsgemäße Formhäute werden beispielsweise als Oberflächendekors im Automobilbereich verwendet. Derartige Formhäute werden meist durch Rotationssintern hergestellt.

Formhäute nach dem Stand der Technik sind entweder einfarbig, oder weisen lediglich größere getrennte Teilbereiche verschiedener Färbung auf. Kompliziertere optische Effekte können nicht oder nur aufwendig ermöglicht werden.

Insbesondere ist es nach dem Stand der Technik nicht möglich Formhäute herzustellen, deren Oberfläche den insbesondere aus dem Kleidungsbereich an sich bekannten "stone-washed Effekt" zeigen.

Ein Verfahren zur Herstellung von Formhäuten mit gepunkteter Oberfläche ist in der Druckschrift JP 02-141212 A offenbart. Bei dem Verfahren werden durch Plastisol- oder Pulversprühen jedoch relativ große Farbpunkte erzeugt, sodass ein "Stone-washed" Effekt hierdurch nicht möglich ist. Eine Verkleinerung der Farbpunkte zur Erzielung des Effekts wäre mit den üblicherweise verwendeten Kunststoffen nicht möglich, da eine zu starke Vermischung der Farbpunkte mit dem umgebenden Material auftreten würde. Ein weiteren Verfahren ist aus der DE 3 517 251 bekannt, Siehe dort Anspruch 9.

Aufgabe der Erfindung ist es daher eine Formhaut, welche wertig wirkende optische Effekte zeigt, wobei der optische Effekt möglichst haltbar ist, sowie ein Verfahren zum Herstellen einer solchen Formhaut, wobei das Verfahren möglichst einfach ausführbar und möglichst zuverlässig sein soll, vorzuschlagen.

Diese Aufgabe wird durch eine Formhaut nach Anspruch 1 sowie ein Verfahren nach Anspruch 7 gelöst. Vorteilhafte Weiterbildungen werden in den abhängigen Ansprüchen genannt.

Dadurch, dass die Formhaut eine Plastisolschicht mit einer ersten Färbung umfasst, wobei in die Oberfläche der Plastisolschicht eine Vielzahl von Plastisolflecken eingebracht sind, welche eine von der ersten Färbung verschiedene zweite Färbung aufweisen, wird auf einfache Weise ein hochwertig wirkender optischer Effekt erreicht. Dadurch, dass der Median des Durchmessers der aufgebrachten Plastisolflecken kleiner als 200 µm ist, kann ein "Stone-washed Effekt" erreicht werden.

Eine solche Formhaut kann hergestellt werden, indem zunächst das zweite pigmenthaltige Plastisol, welches die zweite Färbung aufweist, auf eine Oberfläche einer Form aufgesprüht wird. Dies erfolgt derart, dass keine geschlossene Schicht, sondern eine Vielzahl voneinander getrennter Plastisolflecken auf der Formoberfläche gebildet wird. Anschließend wird das erste Plastisol, welches eine von dem zweiten Plastisol verschiedene Färbung aufweist, auf die Formoberfläche aufgesprüht. Danach wird die so gebildete Formhaut ausgehärtet und aus der Form entnommen.

Durch diese Art der Herstellung wird die genaue Formung der Oberfläche ausschließlich durch die Form vorgegeben. Die Plastisolspritzer bestehend aus dem zweiten Plastisol werden in die Oberfläche der Plastisolschicht bestehend aus dem ersten Plastisol eingebettet. Somit kann ein wertig wirkender optischer Effekt und zugleich eine nicht in unerwünschter Weise raue Oberfläche erzielt werden.

Unter einem Plastisol wird ein Gemisch aus Polymeren und Weichmachern sowie gegebenenfalls weiteren Zusätzen verstanden, bei der eine Löslichkeit der Polymere in den Weichmachern bei Raumtemperatur gering ist, wobei eine Löslichkeit bei einer erhöhten Temperatur, beispielsweise von über 100 oder über 150°C, deutlich erhöht ist und wobei ein Lösen bei erhöhter Temperatur irreversibel ist, derart, dass ein erneutes Abkühlen nicht zum Trennen von Polymeren und Weichmachern führt. Das Lösen der Polymere in dem Weichmacher wird oft als Gelieren bezeichnet.

Unter den Begriff "Plastisol" fällt sowohl das noch ungelierte Gemisch als auch der nach dem Gelieren entstehende Feststoff.

In einer ersten Ausführungsform sind mehr als 5 Flecken aufgebracht. In weiteren Ausführungsformen sind mehr als 10, 100, 1000 oder 10000 Flecken aufgebracht.

In einer Ausführungsform besteht das erste Plastisol und/oder das zweite Plastisol aus einem PVC-haltigen Material. Das PVC-haltige Material kann überwiegend aus PVC bestehen. Vorzugsweise kann das erste und zweite Plastisol überwiegend identisch sein, wobei ein Unterschied lediglich im enthaltenen Farbstoff und optional in der Menge des verwendeten Lösungsmittels und/oder Weichmachers besteht.

In einer Ausführungsform ist die Formhaut einschichtig ausgebildet. Hierdurch ist eine besonders einfache Herstellung möglich. In solchen Ausführungsformen kann die Plastisolschicht beispielsweise eine Dicke zwischen 0,5 mm und 2 mm oder zwischen 1 mm und 1,5 mm aufweisen.

In alternativen Ausführungsformen bildet die Plastisolschicht nur eine, im Vergleich zu einer Gesamtdicke der Formhaut dünne, Deckschicht. Die Formhaut beinhaltet dann eine weitere Schicht, welche auf der den Plastisolflecken abgewandten Seite der Plastisolschicht aufgebracht ist. In derartigen Ausführungsformen kann die Dicke der Plastisolschicht beispielsweise zwischen 50 und 250 µm liegen, während die Dicke der weiteren Schicht beispielsweise so gewählt wird, dass eine Gesamtdicke der Formhaut zwischen 0,5mm und 2mm oder zwischen 1mm und 1,5mm beträgt.

Eine solche weitere Schicht kann beispielsweise als Slushschicht ausgebildet sein und durch einen Rotationssinter Verfahrensschritt nach dem Aufbringen der Plastisolschicht erzeugt werden. Die Ausbildung der Formhaut mit einer weiteren Schicht ist vorteilhaft, da dadurch, dass sowohl die Plastisolflecken als auch die Plastisolschicht aus Plastisol bestehen, eine verbesserte Haftung zwischen den Flecken und der Formhaut gegeben ist, wobei der Großteil der Formhaut zugleich aus günstigerem PVC-Pulver ausgebildet werden kann.

In einer weiteren Ausführungsform ist der Median des Durchmessers der aufgebrachten Plastisolflecken kleiner als 200 µm, 100 µm oder 80µm. Durch derart kleine Plastisolflecken, die aus einer üblichen Beobachtungsdistanz bei entspannten betrachten nicht einzeln aufgelöst werden können, wird ein "Stone-washed Effekt" erzeugt. Ein solcher Effekt ist bisher lediglich aus dem Textilbereich bekannt, wobei der Effekt dort nicht durch auf eine einfarbige Fläche aufgebrachte Farbspritzer geringen Durchmessers, sondern durch gezielt unregelmäßige Abnutzung des Textils erreicht wird. Diese Art der Erzeugung eines "Stone-washed Effekts" ist für den Automobilbereich ungeeignet, da sie nicht nur zu dem gewünschten Effekt, sondern auch zu einer verringerten Lebensdauer führt. Eine solche ist insbesondere im Automobilbereich, in dem ein Austausch von Teilen grundsätzlich mit einem erheblichen Aufwand verbunden ist, inakzeptabel. Hierdurch war es dem Fachmann bislang trotz des bestehenden Bedarfs nicht möglich einen "Stone-washed Effekt" auf Formhäuten zur Verwendung im Automobilbereich vorzusehen.

In weiteren Ausführungsformen beträgt eine Viskosität des ersten und/oder zweiten Plastisols vor dem Aushärten mindestens 1, vorzugsweise mindestens 5 und besonders vorzugsweise mindestens 10, 30 oder 40 Pa·s bei einer Scherrate von 0,1/s und einer Temperatur von 23°C. Eine derart hohe Viskosität bei niedrigen Scherraten ist bezüglich des ersten Plastisols vorteilhaft, da hierdurch ein Herunterlaufen des Plastisols an der Formwand beim Aufbringen, was zu einer ungleichmäßigen Schichtdicke der Plastisolschicht führen würde, verhindert wird. Bezüglich des zweiten Plastisols ergibt sich der gleiche Vorteil, wobei die hohe Viskosität zusätzlich ein übermäßiges Vermischen mit dem ersten Plastisol beim Auftragen desselben verhindert.

In einer weiteren Ausführungsform beträgt eine Viskosität des ersten und/oder zweiten Plastisols vor dem Aushärten höchstens 20, vorzugsweise höchstens 10, besonders vorzugsweise höchstens 5, 2 oder 1 Pa·s bei einer Temperatur von 23°C und einer Scherrate von 100/s. Durch eine derart niedrige Viskosität bei hohen Scherraten wird eine gute Aufsprühbarkeit des entsprechenden Plastisols ermöglicht, wobei dies für das zweite Plastisol besonders vorteilhaft ist, da sich eine Zerstäubung in kleinste Tröpfchen zum Bilden von Plastisolflecken kleinen Durchmessers wie vorangehend beschrieben, bei höherer Viskosität nur schwierig realisieren lässt.

In zusätzlichen Ausführungsformen ist die Viskosität bei niedrigen Scherraten wie vorangehend beschrieben hoch, während die Viskosität bei hohen Scherraten wie vorangehend beschrieben niedrig ist. So werden die Vorteile beider Viskositätsbereiche erreicht, da beim Sprühen eine hohe Scherrate vorliegt, welche zu einer niedrigen Viskosität führt, während nach dem Sprühen aufgrund der niedrigen Scherrate eine deutlich höhere Viskosität vorliegt. Je nach Ausführungsform kann die Viskosität bei der Scherrate von 100/s mindestens doppelt, dreifach, fünffach, zehnfach oder zwanzigfach so groß sein wie bei einer Scherrate von 0,1/s.

In einer weiteren vorteilhaften Ausführungsform des Verfahrens wird ein Abstand einer ersten Düse von der Formoberfläche beim Aufsprühen des ersten Plastisols kleiner gewählt als ein Abstand einer zweiten Düse von der Formoberfläche beim Aufsprühen des zweiten Plastisols. Durch den hohen Abstand beim Aufsprühen des zweiten Plastisols wird eine Hinreichend weite Verteilung ermöglicht um eine Bildung einer geschlossenen Schicht zuverlässig zu vermeiden. Beim Aufsprühen des ersten Plastisols hingegen wird durch den verhältnismäßig kleinen Abstand die Ausbildung einer geschlossenen Schicht sichergestellt.

In einer weiteren Ausführungsform des Verfahrens erfolgt ein Ausprühen des ersten und/oder zweiten Plastisols automatisch. Hierzu kann eine Positionierung einer zum Aufsprühen verwendeten Sprühvorrichtung automatisch verändert werden. Außerdem kann ein Druck in der Sprühvorrichtung automatisch verändert werden. Ist die Sprühvorrichtung als Düse oder dergleichen ausgebildet kann außerdem ein Öffnungsdurchmesser automatisch veränderbar sein.

Vorteilhafte Ausgestaltungen der Erfindung werden Anhand der folgenden Abbildungen genauer erläutert:
- Figur 1: Ausschnitt eines Schnitts durch eine Formhaut entsprechend einer ersten Ausführungsform der Erfindung,
- Figur 2: Aufsicht auf die Formhaut aus Figur 1,
- Figur 3: Ausschnitt eines Schnitts durch eine Formhaut entsprechend einem zweiten Ausführungsbeispiel der Erfindung,
- Figur 4: erster Verfahrensschritt entsprechend den in den Figuren 1 bis 3 gezeigten Ausführungsbeispielen,
- Figur 5: zweiter Verfahrensschritt entsprechend den in den Figuren 1 bis 3 gezeigten Ausführungsformen,
- Figur 6: dritter Verfahrensschritt entsprechend der in Figur 3 gezeigten Ausführungsform und
- Figur 7: Viskositätsverläufe für verschiedene Plastisolzusammensetzungen jeweils abhängig von der Scherrate,
- Figur 8: weiterer Viskositätsverlauf sowie Scherspannung abhängig von der Scherrate.

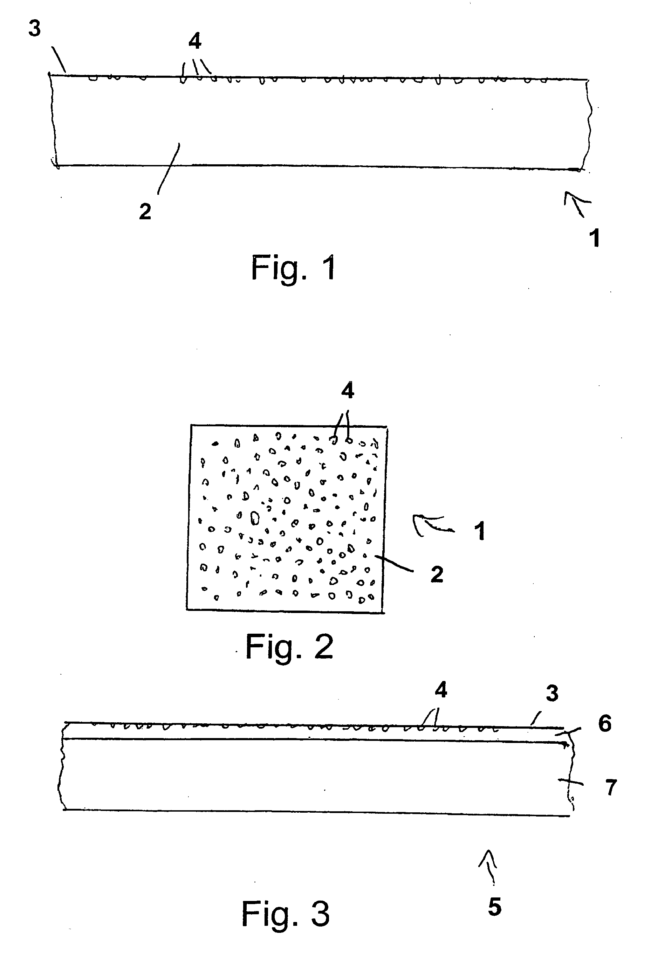

Figur 1 zeigt einen vergrößerten Ausschnitt einer Formhaut 1 entsprechend eines ersten Ausführungsbeispiels der Erfindung. Die Formhaut ist einschichtig aufgebaut und beinhaltet eine Schicht 2 mit einer Oberfläche 3. Die Schicht 2 ist im vorliegenden Ausführungsbeispiel etwa 1,2 mm Dick und besteht aus einem Plastisol einer ersten Färbung. Im ausgehärteten Zustand weist das Plastisol einen Härtegrad von 71 Shore A auf. In die Oberfläche 3 der Schicht 2 ist eine Vielzahl von Plastisolspritzern 4 eingebracht. Bei Aufsicht auf die Formhaut 1 sind teilweise die Schicht 2 und teilweise die Spritzer 4 zu sehen. Die Plastisolspritzer 4 weisen eine andere Färbung auf als die Plastisolschicht 2. Daher entsteht ein hochwertig wirkender optischer Effekt.

Die Oberfläche der Formhaut 1 ist glatt ausgebildet, wobei in alternativen Ausführungsformen auch eine Lederähnlichen genarbte Oberflächenstruktur möglich ist. Eine Oberflächenstruktur ist jedoch unabhängig von den aufgebrachten Plastisolspritzern 4, d.h. die Plastisolspritzer sind in die Oberfläche eingeformt und bilden keine von der restlichen Oberfläche der Schicht 2 abgesetzten Erhöhungen. Somit wird weder ein Aussehen der Oberflächenstruktur noch eine Haptik derselben durch die Plastisolspritzer in negativer Weise beeinflusst. Außerdem ist eine Abriebfestigkeit der Plastisolspritzer 4 dadurch, dass diese in die Oberfläche 3 der Schicht 2 eingebracht sind erhöht.

In dem in den Figuren 1 und 2 dargestellten Ausführungsbeispiel beträgt ein Median des Durchmessers der Plastisolflecken 50 µm. Hierdurch werden die Plastisolflecken bei entspanntem Sehen und üblichen Betrachtungsanbständen und -bedingungen nicht mehr getrennt aufgelöst. Stattdessen wird als Gesamteffekt ein Stone-washed Effekt wahrgenommen.

In Figur 3 ist ein zweites Ausfürungsbeispiel einer erfindungsgemäßen Formhaut 5 gezeigt. Diese Formhaut unterscheidet sich zu der Formhaut aus den Figuren 1 und 2 dadurch, dass sie zweischichtig aufgebaut ist. Die Plastisolspritzer 4 sind wie im ersten Ausführungsbeispiel in die Oberfläche 3 einer Plastisolschicht 6 eingebracht. Die Plastisolschicht 6 weist jedoch nur eine Dicke von etwa 200 µm auf. Auf der Rückseite der Plastisolschicht ist eine weitere Schicht 7 aufgebracht. Die Dicke der weiteren Schicht 7 wird so gewählt, dass die Formhaut eine Gesamtdicke von etwa 1,2 mm aufweist. Im vorliegenden Ausführungsbeispiel ist die weitere Schicht 1 mm dick.

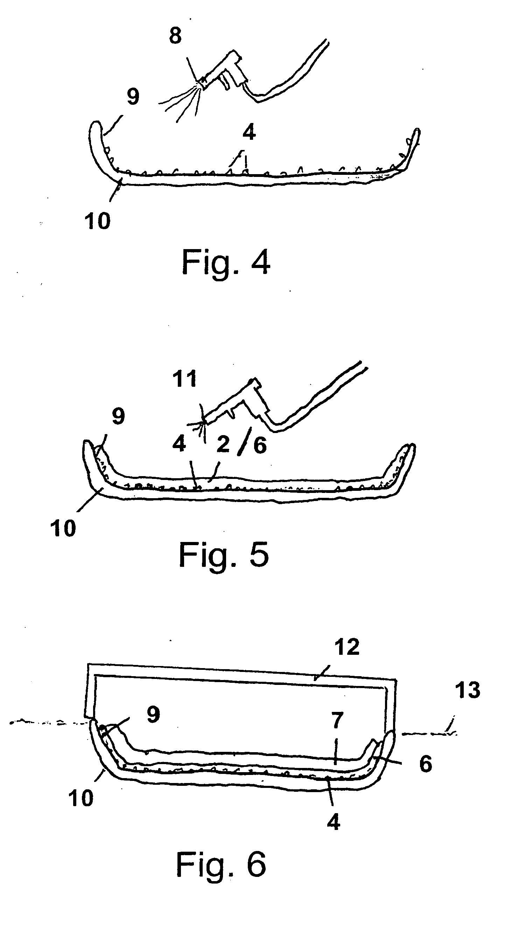

Figur 4 zeigt den ersten Schritt eines erfindungemäßen Verfahrens. Mit einer als Düse 8 ausgebildeten Sprühvorrichtung wird das zweite Plastisol auf eine Oberfläche 9 einer Form 10 aufgesprüht, derart dass keine zusammenhängende Schicht sondern eine Vielzahl von Plastisolspritzern gebildet wird. Ein Abstand beim der Sprühvorrichtung von der Formoberfläche 9 kann beim Sprühen beispielsweise zwischen 70 und 100 cm liegen. Eine Position der Sprühvorrichtung kann vorteilhaft automatisch eingestellt und verändert werden, so dass eine Reproduzierbarkeit gegeben ist. Außerdem kann es vorteilhaft sein, das zweite Plastisol aus mehreren verschiedenen Richtungen aufzusprühen, da hierdurch eine gleichmäßigere Verteilung der Plastisolspritzer erreicht werden kann. Die Form 10 kann beispielsweise als galvanisch erzeugte Nickelschale ausgebildet sein.

Das zweite Plastisol ist als PVC-haltiges Plastisol ausgebildet. Das Plastisol besteht hauptsächlich aus einer Dispersion von etwa 30 µm großen PVC-Sphären. Zusätzlich enthält das Plastisol Weichmacher, 5-15 Vol % Pigmente, Prozessstabilisatoren, Mittel zur Erhöhung der Stabilität bei Alterung, Lösungsmittel (vorzugsweise 12 - 18 vol. %) und Rheologieverbesserer. Je nach gewünschter Ausbildung der Formhaut können auch weitere Zusätze von Vorteil sein.

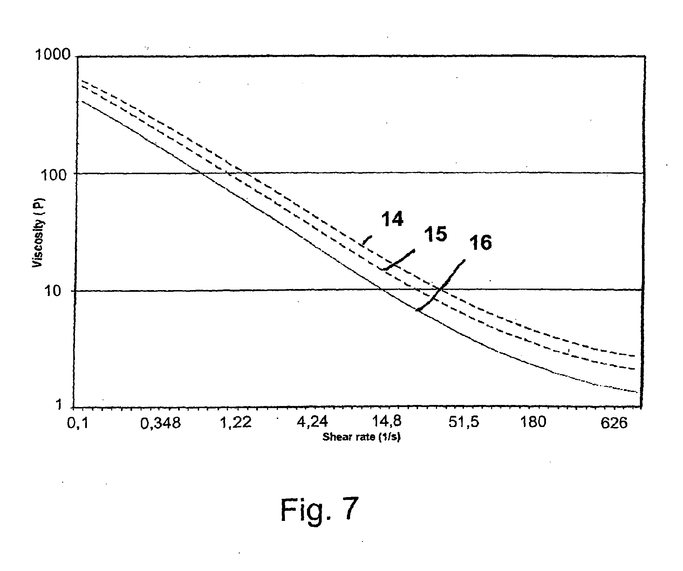

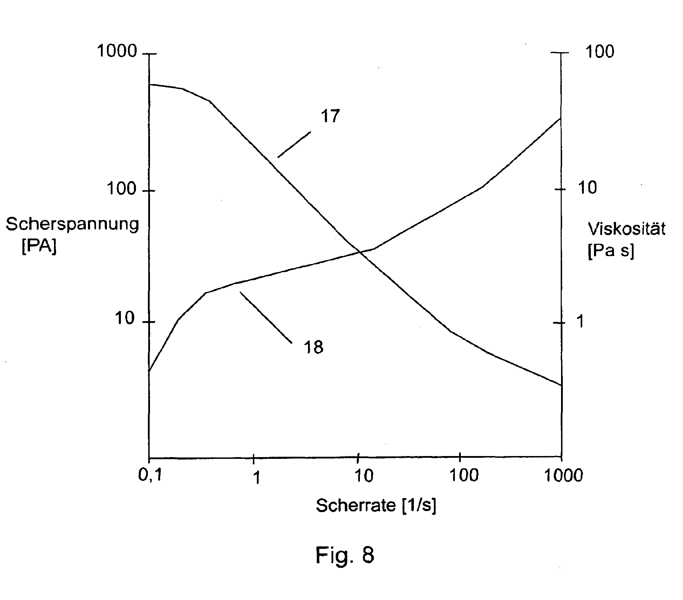

Das zweite Plastisol weist bei hohen Scherraten von 100/s eine Viskosität von nur 0,7 Pa s auf. Hierdurch ist eine leichte Sprühbarkeit gegeben. Gleichzeitig weist das zweite Plastisol bei niedrigen Scherraten von etwa 0,1/s eine Viskosität von etwa 60 Pascalsekunden auf. Dadurch, dass das zweite Plastisol bei niedrigen Scherraten sehr viskos ist, wird ein Verlaufen des Plastisols vermieden. Durch die auftretende Scherverdünnung werden die Vorteile einer hohen Viskosität bei niedrigen Scherraten und der niedrigen Viskosität bei hohen Scherraten vereint. Zur weiteren Verdeutlichung sind Viskositätsverläufe 14, 15, 16 abhängig von der Scherrate für drei verschiedene Lösungsmittelgehalte (12 % bei Verlauf 14, 15% bei Verlauf 15, 18% bei Verlauf 16) als Figur 7 angefügt. Die angegebenen Scherraten beziehen sich jeweils auf das noch nicht ausgehärtete Plastisol bei einer Temperatur von 23°C. Ebenso ist die Viskosität in Abhängigkeit von der Scherrate für ein Beispielplastisol als Graph 17 in Fig. 8 schematisch dargestellt. In der Figur 8 wird außerdem der Verlauf 18 der Scherspannung in Abhängigkeit von der Scherrate gezeigt. Geeignete Plastisole mit vergleichbaren Eigenschaften wie in der Fig. 8 dargestellt sind beispielsweise von den Firmen Arkema oder Anton Paar GmbH erhältlich.

Wie in Figur 5 gezeigt wird nach dem Aufbringen der Plastisolspritzer ein erstes Plastisol aufgesprüht, so dass sich eine Schicht 2 bzw. 6 bildet. Zum Aufsprühen kann eine zweite Düse 11 verwendet werden. Ein Druck des Plastisols in der Düse und/oder ein Sprühabstand und/oder eine Verschiebungsgeschwindigkeit der Düse über die Oberfläche 9 der Form 10 wird derart gewählt, dass eine gleichmäßige Schicht mit der gewünschten Schichtdicke erzeugt wird. Ein Sprühabstand kann beispielsweise zwischen 30 und 70 cm betragen und somit geringer sein als der Sprühabstand beim Aufbringen des zweiten Plastisols. Die Zusammensetzung des ersten Plastisols kann nahezu identisch sein wie die des zweiten Plastisols, wobei lediglich ein Lösungsmittelgehalt und die enthaltenen Pigmente unterschiedlich sind. Durch die somit ähnliche Zusammensetzung beider Plastisole ist eine starke Anbindung der Plastisolspritzer an die Schicht 2 bzw. 6 möglich.

Je nach Ausführungsform können auch mehrere Schichten verschiedener Plastisole aufgesprüht werden, wobei sich die Plastisole beispielsweise durch einen verschiedenen Härtegrad unterscheiden können.

Das verwendete erste Plastisol ist in diesem Ausführungsbeispiel im Wesentlichen mit dem zweiten Plastisol identisch und unterscheidet sich nur durch eine Farbe der Pigmente sowie durch einen Lösungsmittelgehalt. Hierdurch ist eine besonders feste Verbindung zwischen den Plastisolspritzern 4 und der Schicht 2, 5 möglich. Aufgrund der nahezu identischen Zusammensetzung weist auch das erste Plastisol eine Viskosität wie oben beschrieben auf. Durch die bei niedrigen Scherraten hohe Viskosität beider Plastisole ist ein Vermischen der beiden Plastisole beim Aufsprühen des ersten Plastisols ausgeschlossen.

Nach dem Sprühen wird die Form zum Aushärten der Plastisole erhitzt. Im ersten Ausführungsbeispiel wird die Form beispielsweise auf 285°C erhitzt. Entsprechend dem in den Figuren 1 und 2 gezeigten Ausführungsbeispiel ist die Formhaut nun fertig und kann aus der Form entnommen werden.

Im Falle des in Figur 3 gezeigten Ausführungsbeispiel wird die bis jetzt gebildete Schicht 6 zur Bildung der weiteren Schicht 7 hinterslushed, wie in Figur 6 gezeigt. Hierzu wird auf die vorzugsweise noch heiße Form ein Pulverkasten 12 mit einem als PVC-Pulver ausgebildeten Polymerpulver aufgesetzt. Anschließend wird die Form 10 mit zusammen mit den Pulverkasten 12 um eine Achse 13 gedreht und eventuell zugleich weiter beheizt. Das Pulver haftet an der in der heißen Form 10 angeordneten Schicht 6 an und bildet die weitere Schicht 7, welche durch weiteres Heizen ausgeliert wird. Die so gebildete Formhaut 1 kann der Form 10 entnommen werden.

Ein weiterer Aspekte der Erfindung betrifft eine Formhaut (1; 5) umfassend eine Plastisolschicht (2,6) bestehend aus einem ersten Plastisol mit einer ersten Färbung, wobei in einer Oberfläche (3) der Plastisolschicht eine Vielzahl von Plastisolspritzern (4) eingebracht sind, welche aus einem zweiten Plastisol mit einer von der ersten Färbung verschiedenen zweiten Färbung bestehen. Diese kann unabhängig von der Größe der Plastisolspritzer an sich sowie in Kombination mit beliebigen anderen in der Beschreibung oder den Ansprüchen genannten Merkmalen als vorteilhaft betrachtet werden.

Gleiches gilt für ein Verfahren zum Herstellen einer Formhaut (1; 5) mit den Schritten:
- Aufsprühen einer Plastisolschicht (2; 6) aus einem ersten Plastisol auf eine Oberfläche (9) einer Form (10),
- vorangehendes Aufsprühen eines zweiten Plastisols mit einer zweiten Färbung auf eine Form (10), derart dass eine Vielzahl voneinander getrennter Plastisolflecken (4) auf der Oberfläche (9) der Form (10) gebildet werden, wobei das zweite Plastisol eine von der ersten Färbung verschiedene zweite Färbung aufweist
- Aushärten und Entnehmen der Formhaut (1; 5).

## Patentansprüche

1. Formhaut (1; 5) umfassend eine Plastisolschicht (2,6) bestehend aus einem ersten Plastisol mit einer ersten Färbung, wobei in einer Oberfläche (3) der Plastisolschicht eine Vielzahl von einander getrennter Plastisolspritzer (4) mit einem Durchmesser eingebracht sind, welche aus einem zweiten Plastisol mit einer von der ersten Färbung verschiedenen zweiten Färbung bestehen und wobei ein Median des Durchmessers der Plastisolspritzer kleiner als 200µm ist.

2. Formhaut (1; 5) nach Anspruch 1, **dadurch gekennzeichnet, dass** die erste Schicht (2; 7) und/oder die Plastisolschicht (2; 6) und/oder die Plastisolspritzer (4) aus einem PVC-haltigen Material bestehen.

3. Formhaut (1; 5) nach Anspruch 1 oder 2, **dadurch gekennzeichnet, dass** die Formhaut einschichtig ausgebildet ist.

4. Formhaut (1; 5) nach Anspruch 1 oder 2, **dadurch gekennzeichnet, dass** die Plastisolschicht (6) auf einer weiteren Schicht (7) angeordnet ist, welche vorzugsweise als Slush-Schicht ausgebildet sein kann.

5. Formhaut (1; 5) nach einem der vorangehenden Ansprüche, **dadurch gekennzeichnet, dass** ein Median des Durchmessers der Plastisolspritzer kleiner als 100 µm und vorzugsweise kleiner als 80 µm ist.

6. Formhaut (1; 5) nach einem der vorherigen Ansprüche, **dadurch gekennzeichnet, dass** eine Gesamtdicke der Formhaut (1; 5) zwischen 0,5 und 2 mm beträgt, wobei eine Dicke der Plastisolschicht (6) vorzugsweise zwischen 50 µm und 250 µm beträgt.

7. Verfahren zum Herstellen einer Formhaut (1; 5) mit den Schritten:
- Aufsprühen einer Plastisolschicht (2; 6) aus einem ersten Plastisol auf eine Oberfläche (9) einer Form (10);
- vorangehendes Aufsprühen eines zweiten Plastisols mit einer zweiten Färbung auf eine Form (10), derart dass eine Vielzahl voneinander getrennter Plastisolspritzer (4) auf der Oberfläche (9) der Form (10) gebildet werden, wobei das zweite Plastisol eine von der ersten Färbung verschiedene zweite Färbung aufweist und wobei ein Median des Durchmessers der Plastisolspritzer kleiner als 200µm ist,
- Aushärten und Entnehmen der Formhaut (1; 5).

8. Verfahren nach Anspruch 7, **dadurch gekennzeichnet, dass** nach dem Aufsprühen der Plastisolschicht (2, 6) eine weitere Schicht (7) durch Rotationssintern aufgebracht wird.

9. Verfahren nach Anspruch 7 oder 8, **dadurch gekennzeichnet, dass** ein erstes und/oder zweites Plastisol vor dem Aushärten eine Viskosität von mindestens 1, vorzugsweise mindestens 5 und besonders vorzugsweise mindestens 10 Pa·s bei einer Temperatur von 23°C und einer Scherrate von 0,1/s aufweist.

10. Verfahren nach einem der Ansprüche 7 bis 9, **dadurch gekennzeichnet, dass** ein erstes und/oder zweites Plastisol vor dem Aushärten eine Viskosität von höchstens 20, vorzugsweise höchstens 10, besonders vorzugsweise höchstens 5 Pa·s bei einer Temperatur von 23°C und einer Scherrate von 100/s aufweist.

11. Verfahren nach einem der Ansprüche 7 bis 10, **dadurch gekennzeichnet, dass** ein Abstand einer zum Aufsprühen der Plastisolspritzer verwendeten Aufsprühvorrichtung von der Formoberfläche beim Aufsprühen der Plastisolspritzer (4) größer ist als ein Abstand einer zum Aufsprühen der Plastisolschicht (2; 6) verwendeten weiteren Aufsprühvorrichtung von der Formoberfläche beim Aufsprühen der Plastisolschicht.

12. Verfahren nach einem der Ansprüche 7 bis 11, **dadurch gekennzeichnet, dass** ein Aufsprühen des ersten und/oder des zweiten Plastisols automatisiert erfolgt.

## Claims

1. A molded skin (1; 5) including a plastisol layer (2, 6) comprising a first plastisol having a first color, wherein a plurality of plastisol splashes (4) having a diameter and being separated from each other are introduced into a surface (3) of the plastisol layer and comprise a second plastisol having a second color different from the first color, and wherein a median diameter of the plastisol splashes is smaller than 200 µm.

2. A molded skin (1; 5) in accordance with claim 1, **characterized in that** the first layer (2; 7) and/or the plastisol layer (2; 6) and/or the plastisol layers (4) comprise a material containing PVC.

3. A molded skin (1; 5) in accordance with claim 1 or claim 2, **characterized in that** the molded skin is formed in one layer.

4. A molded skin (1; 5) in accordance with claim 1 or claim 2, **characterized in that** the plastisol layer (6) is arranged on a further layer (7) which can preferably be formed as a slush layer.

5. A molded skin (1; 5) in accordance with one of the preceding claims, **characterized in that** a median of the diameter of the plastisol splashes is smaller than 100 µm and is preferably smaller than 80 µm.

6. A molded skin (1; 5) in accordance with one of the preceding claims, **characterized in that** a total thickness of the molded skin (1; 5) amounts to between 0.2 and 2 mm, with a thickness of the plastisol layer (6) preferably amounting to between 50 µm and 250 µm.

7. A method of manufacturing a molded skin (1; 5) comprising the steps:
- spraying on a plastisol layer (2; 6) of a first plastisol onto a surface (9) of a mold (10);
- preceding spraying on of a second plastisol having a second color onto a mold (10) such that a plurality of mutually separate plastisol splashes (4) are formed on the surface (9) of the mold (10), with the second plastisol having a second color different from the first color, and with a median of the diameter of the plastisol splashes being smaller than 200 µm;
- hardening and removing the molded skin (1; 5).

8. A method in accordance with claim 7, **characterized in that** a further layer (7) is applied by rotational sintering after the spraying on of the plastisol layer (2, 6).

9. A method in accordance with claim 7 or claim 8, **characterized in that** a first and/or second plastisol has a viscosity before hardening of at least 1, preferably at least 5, and particularly preferably at least 10 Pa•s at a temperature of 23°C and a shear rate of 0.1/s.

10. A method in accordance with one of the claims 7 to 9, **characterized in that** a first and/or second plastisol has a viscosity before hardening of at most 20, preferably at most 10, particularly preferably at most 5 Pa•s at a temperature of 23°C and a shear rate of 100/s.

11. A method in accordance with one of the claims 7 to 10, **characterized in that** a distance of a spray apparatus used for spraying on the plastisol splashes from the mold surface on the spraying on of the plastisol splashes (4) is larger than a distance of a further spray apparatus used for spraying on the plastisol layer (2; 6) from the mold surface on the spraying on of the plastisol layer.

12. A method in accordance with one of the claims 7 to 11, **characterized in that** a spraying on of the first and/or second plastisol takes place in an automated manner.

## Revendications

1. Peau moulée (1 ; 5) comprenant une couche de plastisol (2, 6) constituée d'un premier plastisol ayant une première coloration, un grand nombre de mouchetures de plastisol (4), séparées les unes des autres, ayant un certain diamètre, étant incorporées dans une surface (3) de la couche de plastisol, mouchetures qui sont constituées d'un deuxième plastisol ayant une deuxième coloration, différente de la première coloration, une médiane du diamètre des mouchetures de plastisol étant inférieure à 200 µm.

2. Peau moulée (1 ; 5) selon la revendication 1, **caractérisée en ce que** la première couche (2 ; 7) et/ou la couche de plastisol (2 ; 6) et/ou les mouchetures de plastisol (4), sont constituées d'un matériau contenant du PVC.

3. Peau moulée (1 ; 5) selon la revendication 1 ou 2, **caractérisée en ce que** la peau moulée a une configuration monocouche.

4. Peau moulée (1 ; 5) selon la revendication 1 ou 2, **caractérisée en ce que** la couche de plastisol (6) est disposée sur une couche supplémentaire (7), qui de préférence peut être configurée comme une couche de pâte.

5. Peau moulée (1 ; 5) selon l'une des revendications précédentes, **caractérisée en ce qu'**une médiane du diamètre des mouchetures de plastisol est inférieure à 100 µm et de préférence inférieure à 80 µm.

6. Peau moulée (1 ; 5) selon l'une des revendications précédentes, **caractérisée en ce qu'**une épaisseur totale de la peau moulée (1 ; 5) est comprise entre 0,5 et 2 mm, une épaisseur de la couche de plastisol (6) étant de préférence comprise entre 50 µm et 250 µm.

7. Procédé de fabrication d'une peau moulée (1 ; 5), comportant les étapes suivantes:
- pulvérisation, sur une surface (9) d'un moule (10) d'une couche de plastisol (2 ; 6) constituée d'un premier plastisol ;
- pulvérisation préalable, sur un moule (10), d'un deuxième plastisol ayant une deuxième coloration, de telle sorte qu'il se forme sur la surface (9) du moule (10) un grand nombre de mouchetures de plastisol (4) séparées les unes des autres, le deuxième plastisol présentant une deuxième coloration, différente de la première coloration, et une médiane du diamètre des mouchetures de plastisol étant inférieure à 200 µm,
- durcissement et extraction de la peau moulée (1 ; 5).

8. Procédé selon la revendication 7, **caractérisé en ce que**, après la pulvérisation de la couche de plastisol (2, 6), une couche supplémentaire (7) est appliquée par frittage rotatif.

9. Procédé selon la revendication 7 ou 8, **caractérisé en ce qu'**un premier et/ou un deuxième plastisol présentent, avant le durcissement, une viscosité d'au moins 1, de préférence d'au moins 5 et d'une manière particulièrement préférée d'au moins 10 Pa.s, à une température de 23°C et pour une vitesse de cisaillement de 0,1/s.

10. Procédé selon l'une des revendications 7 à 9, **caractérisé en ce qu'**un premier et/ou un deuxième plastisol présentent, avant le durcissement, une viscosité d'au plus 20, de préférence d'au plus 10, d'une manière particulièrement préférée d'au plus 5 Pa.s, à une température de 23°C et pour une vitesse de cisaillement de 100/s.

11. Procédé selon l'une des revendications 7 à 10, **caractérisé en ce qu'**une distance entre un dispositif de pulvérisation, utilisé pour pulvériser les mouchetures de plastisol, et la surface du moule, lors de la pulvérisation des mouchetures de plastisol (4), est supérieure à une distance entre un autre dispositif de pulvérisation, utilisé pour pulvériser la couche de plastisol (2 ; 6), et la surface du moule, lors de la pulvérisation de la couche de plastisol.

12. Procédé selon l'une des revendications 7 à 11, **caractérisé en ce qu'**une pulvérisation du premier et/ou du deuxième plastisol a lieu d'une manière automatisée.
